# EUROPÄISCHE PATENTSCHRIFT

(11) **EP 0 925 138 B1**
(45) Veröffentlichungstag und Bekanntmachung des Hinweises auf die Patenterteilung: **14.11.2001**
(21) Anmeldenummer: 97940119.7
(22) Anmeldetag: 22.08.1997
(51) Int. Cl.: B23H 7/08

(54) **HOCHFESTE ERODIERELEKTRODE**
HIGH-STRENGTH EROSION ELECTRODE
ELECTRODE D'EROSION DE FORTE INTENSITE

(30) Priorität: 04.09.1996 DE 19635775
(43) Veröffentlichungstag der Anmeldung: 30.06.1999
(73) Patentinhaber: Berkenhoff GmbH, 35452 Heuchelheim (DE)
(72) Erfinder: BARTHEL, Bernd, D-35745 Herborn-Merkenbach (DE); GROOS, Heinrich, D-35745 Herborn (DE); HERMANNI, Hans, D-35764 Sinn-Fleisbach (DE); TAUBER, Klaus, D-35444 Biebertal (DE)
(74) Vertreter: Missling, Arne, Dipl.-Ing.
(86) Internationale Anmeldenummer: EP9704595
(87) Internationale Veröffentlichungsnummer: WO9809764

(56) Entgegenhaltungen:
- EP-A- 0 185 492
- EP-A- 0 253 942
- WO-A-89/12523

## Beschreibung

Die Erfindung betrifft ein Verfahren zur Herstellung einer Drahtelektrode für das Funkenerodierverfahren sowie eine Drahtelektrode für dieses Verfahren, welche aus einem Kern aus Stahl, einer Zwischenschicht aus Kupfer oder einer hochkupferhaltigen Legierung und einer Mantelschicht mit mindestens 40 % Zink besteht.

Mehrlagig aufgebaute Drahtelektroden, die einen Kern aus Stahl, eine um den Kern angeordnete Zwischenschicht aus Kupfer und eine äußere zinkenthaltende Mantelschicht aufweisen, sind bekannt, beispielsweise aus der DE-PS 29 06 245. Alle bekannten Drahtelektroden, die mit einer Stahlseele ausgebildet sind, weisen zwar eine im Vergleich zu Kupfer- oder Messingelektroden erhöhte Festigkeit auf, jedoch zeigen alle diese Erodierelektroden den Nachteil, wenn sie vergleichsweise hohe Festigkeiten aufweisen, daß deren elektrische Leitfähigkeit sehr gering ist und gerade einmal 8 S·m/mm² erreichen. Die vergleichsweise hohe Zugfestigkeit ist insbesondere für das Schneiden hoher Werkstücke oder aber auch von Kleinstteilen vorteilhaft, da hier hohe Drahtspannungen gefordert sind. Diese bekannten Drahtelektroden zeigen jedoch den Nachteil, daß deren Erodierleistung relativ gering ist. Inbesondere beim Schneiden von Kleinstteilen mit Erodierdrahtdurchmessern von bis zu 10 um werden hohe Drahtfestigkeiten verlangt, um Auslenkung und Vibration des Drahtes auf ein Minimum zu reduzieren. Für das Schneiden von Kleinstteilen mit Drahtstärken von 100 µm und weniger wurden bisher Wolfram- bzw. Molybdändrähte eingesetzt, die extrem teuer in der Herstellung sind. Erodierdrähte mit einer Stahlseele sowie einer Messingmantelschicht konnten sich für diesen Einsatzzweck bisher nicht durchsetzen, da diese immer vergleichsweise zu Wolframdrähten eine niedrigere Festigkeit und ein schlechteres Erodierverhalten zeigten.

Eine Möglichkeit für eine feste Erodierelektrode ist in der WO 89/12523 offenbart. Diese Erodierelektrode hat sich jedoch in der Vergangenheit nicht durchgesetzt. Gemäß dieser Druckschrift handelt es sich hierbei um eine Erodierelektrode aus einem kupferbeschichteten Stahlkern, der mit einer homogenen äußeren Messingschicht in einem klassischen Prozeß beschichtet wird.

Der Erfindung liegt die Aufgabe zugrunde, hochfeste Erodierelektroden mit einer Seele aus Stahl der eingangs genannten Art sowie ein Verfahren zu deren Herstellung vorzuschlagen, die Festigkeiten aufweisen, die 1800 N/mm² betragen und übersteigen und die zudem eine vergleichsweise hohe Leitfähigkeit von 10 S·m/mm² und mehr haben.

Diese Aufgabe wird mit den Merkmalen des Anspruches 1 bzw. des Anspruches 5 gelöst.

Ein erfindungsgemäßer Erodierdraht besitzt somit einen Stahlkern K mit einem Kohlenstoffgehalt von 0,6 bis 1 %, wobei auf diesem Stahlkern eine hochkupferhaltige Kupferlegierung als Zwischenschicht ZS aufgebracht ist. Diese Zwischenschicht wird von einer Mantelschicht MS bedeckt, die beim fertigen Erodierdraht aus einer Zinklegierung besteht, deren Zinkanteil zwischen 40 und 60 % liegt. Für die Erreichung der vergleichsweise hohen Leitfähigkeit der Erodierelektrode bei gleichermaßen hoher Festigkeit ist es Voraussetzung, daß der Kern ein patentiertes Gefüge aufweist, vorteilhaft aus Sorbit besteht, wobei zwischen der Mantelschicht und dem Kern eine weitere Schicht angeordnet ist, die hochkupferhaltig ist, d. h. nur gering legiert ist. Als Legierungselement hat sich hier Silber in Form der Legierung CuAg1 als besonders vorteilhaft herausgestellt. Gleichermaßen ist eine Kupferlegierung mit einem geringen Zinkanteil für den vorgesehenen Einsatzzweck mit Vorteil zu verwenden. Auf dieser Zwischenschicht ist eine Mantelschicht aufgebracht, die aus einer Zinklegierung besteht, bei der der Zinkanteil mindestens 40 % erreicht und maximal 60 % betragen darf.

Die Herstellung einer erfindungsgemäßen Drahtelektrode könnte dadurch erfolgen, daß auf einen mit Kupfer ummantelten Stahlkern eine Hülle aus einem Messingrohr oder - band aufgebracht wird und dann im Anschluß daran der Verbund mittels Drahtziehen reduziert wird. Diese Art der Fertigung wird desto problematischer, je höher der Zinkanteil in der Mantelschicht sein soll. Ein weiteres Verfahren könnte darin bestehen, einen kupferummantelten Stahldraht im Tauchverfahren mit zinkhaltiger Mantelschicht zu versehen. Hier könnte der Zinkgehalt beliebig eingestellt werden. Die Schwierigkeit bei diesem Verfahren besteht darin, die Mantelschicht mit gleichmäßiger Stärke über den Umfang aufzubringen.

Ein sehr vorteilhaftes Verfahren für die Herstellung einer erfindungsgemäßen Drahtelektrode besteht darin, daß eine Stahlseele mit einem Kupfermantel ummantelt wird, wobei das Gefüge der Stahlseele in patentierter Form vorliegen sollte. Im Anschluß daran wird dann auf diese Kupferzwischenschicht eine Zinklegierung aufgebracht, wobei im einfachsten Fall die Mantelschicht aus reinem Zink besteht. Im Anschluß daran erfolgt eine Diffusionsglühung, deren Dauer in Abhängigkeit der Diffusionstemperatur so gewählt wird, daß die gesamte Mantelschicht eine Zinklegierung bildet, deren Zinkgehalt maximal 60 % beträgt. Die Dauer der Diffusionsglühung wird des weiteren so bestimmt, daß sich weiterhin die geforderten Flächenanteile für den Kerndraht, die Zwischenschicht und die Mantelschicht einstellen, wobei diese Flächenanteile der drei Bereiche nicht nur für.die im Enddraht erzielte Festigkeit, sondern auch für dessen Leitfähigkeit maßgebend sind. Weiter entscheidend für die Festigkeit aber auch für die Leitfähigkeit des Erodierdrahtes ist, daß im Enddraht der Kern aus einem patentierten Gefüge besteht, wobei hier gleichermaßen elektrische Leitfähigkeit und Festigkeit optimiert wird.

Nach der erfolgten Diffusionsglühung wird der Draht, dessen Kern im patentierten Zustand bereits vorliegen sollte, durch Ziehen auf seinen Durchmesser reduziert.

Der Flächenanteil des Kernes an der Elektrode sollte zwischen 50 bis 75 % der Gesamtelektrode betragen. Der Flächenanteil der Zwischenschicht sollte zwischen 5 und 40 % und der Flächenanteil der Mantelschicht zwischen 10 bis 30 % liegen. Hält man des weiteren die Forderung ein, daß der Zinkgehalt der Mantelschicht zwischen 40 und 60, vorteilhaft bei etwas über 50 %, liegt, so erhält man eine Elektrode, die eine Leitfähigkeit hat, die zwischen 10 und 18 S·m/mm² liegt, wobei gleichzeitig Festigkeiten erhalten werden, die zwischen 1800 und 2500 N/mm² liegen. Hierbei ist festzustellen, daß die Forderung hoher Leitfähigkeit und hoher Festigkeit gegenläufig ist, d. h. ein erfindungsgemäßer Draht mit sehr hoher Festigkeit hat eine vergleichsweise niedrige elektrische Leitfähigkeit und umgekehrt. Die erfindungsgemäßen Drähte lassen sich bis auf Durchmesser von unter 10 µm ziehen, d. h. auf Durchmesser, die für die bisher bekannten Anwendungsfälle ausreichend klein sind. Dabei hat sich als besonders vorteilhaft herausgestellt, daß diese Drähte mit dünnem Durchmesser ohne weiteres die bisher eingesetzten Wolfram- und Molybdändrähte ersetzen können und im Vergleich zu diesen wesentlich billiger in der Herstellung sind, keine Alterung aufzeigen, geringere Rohstoffkosten verursachen und darüber hinaus eine höhere Fertigungssicherheit bieten und gleichmäßige Erodiereigenschaften aufweisen. Die erreichte Fertigungsqualität ist so groß, daß praktisch kein Ausfall des erfindungsgemäßen Drahtes auf der Erodiermaschine eintritt, während der Ausfall des bisher eingesetzten Molybdän- bzw. Wolframdrahtes bis zu 50 % beträgt.

Bei Erodierdrähten mit Durchmessern über 100 µm ist die hohe Festigkeit insbesondere dann von Vorteil, wenn Werkstücke größerer Höhe geschnitten werden sollen, da hier hohe Drahtspannungen erforderlich sind, um Durchbiegung und Vibrationen klein zu halten.

Eine erfindungsgemäße Elektrode zeichnet sich durch eine hohe Leitfähigkeit bei vergleichbar hoher Festigkeit aus. Darüber hinaus ist die Schnittqualität bei hoher Konturengenauigkeit sehr gut, wobei dies durch die hohe Drahtspannung aufgrund der hohen Festigkeit des Drahtes begünstigt wird.

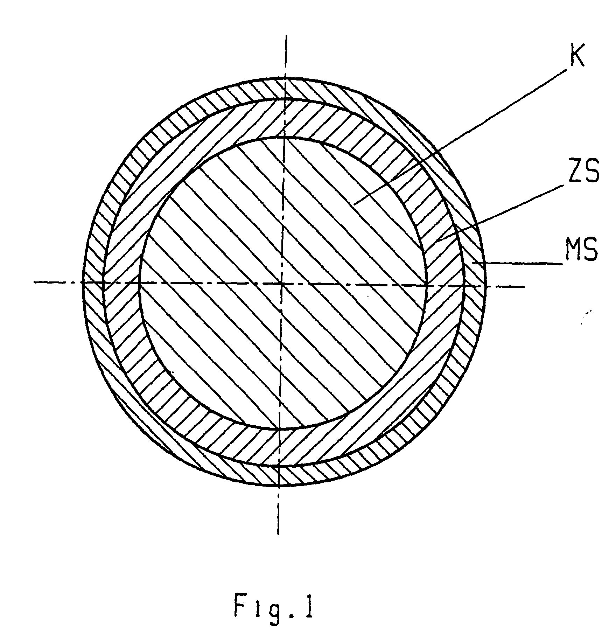

## Patentansprüche

1. Verfahren zur Herstellung einer hochfesten Erodierelektrode mit einem Kern aus Stahl, einer Zwischenschicht aus Kupfer oder einer hochkupferhaltigen Legierung und einer Mantelschicht aus einer mindestens 40 % Zink enthaltenden Legierung, **dadurch gekennzeichnet, daß** als Kern ein Stahl mit einem Kohlenstoffgehalt von 0,6 bis 1 Gew.% verwendet wird, auf dem die Zwischenschicht aus Kupfer oder einer hochkupferhaltigen Legierung aufgebracht wird, daß auf der Zwischenschicht eine Mantelschicht aus Zink oder einer hochzinkhaltigen Legierung aufgebracht wird, daß der Draht vor einer ersten Zwischenglühung einer Diffusionsglühung derart unterworfen wird, daß zum einen die Mantelschicht eine Legierung mit einem Zinkgehalt bildet, deren Schmelzpunkt höher ist als die für das Patentieren des Stahlkernes erforderliche Austenitisierungstemperatur und zum anderen der Diffusionsvorgang solange durchgeführt wird, daß unter Berücksichtigung einer bzw. mehreren folgenden Patentierungen des Erodierdrahtes die Mantelschicht die gewünschte Zusammensetzung und Stärke hält, wobei die Erodierelektrode bei jedem Zwischenglühen patentiert wird.

2. Verfahren nach Anspruch 1, **dadurch gekennzeichnet, daß** als Ausgangsdraht ein patentierter Stahldraht, der mit einer Kupferzwischenschicht versehen ist, eingesetzt wird, daß auf der Zwischenschicht eine hochzinkhaltige Mantelschicht aufgebracht wird, daß anschließend der Draht einer Diffusionsglühung derart unterworfen wird, daß sich eine Messingmantelschicht vorbestimmter Zusammensetzung und Stärke ergibt und daß die Erodierelektrode nach jedem Verformungsabschnitt vor Erreichen ihres Enddurchmessers patentiert wird.

3. Verfahren nach Anspruch 1 oder 2, **dadurch gekennzeichnet, daß** die Mantelschicht nach der ersten Diffusionsglühung einen Zinkgehalt aufweist, der 60 % nicht übersteigt.

4. Verfahren nach einem der Ansprüche 2 oder 3, **dadurch gekennzeichnet, daß** der Ausgangsdraht einen Kerndurchmesser von 0,8 mm und eine Schichtstärke der Zwischenschicht von 0,1 mm aufweist, daß die auf der Zwischenschicht aufgebrachte Mantelschicht 30 µm beträgt, daß der Draht dann einer Diffusionsglühung bei 400°C über 4 h unterworfen wird und anschließend auf einen Durchmesser von ca. 0,4 mm gezogen wird, daß der Erodierdraht danach patentiert und anschließend unter gegebenenfalls weiteren Patentierungen auf seinen Enddurchmesser gezogen wird.

5. Erodierelektrode mit einem Kern aus Stahl, einer Zwischenschicht aus Kupfer oder einer hochkupferhaltigen Legierung und einer Mantelschicht mit mindestens 40 % Zink, **dadurch gekennzeichnet, daß** der Stahlkern ein patentiertes Gefüge mit einem Kohlenstoffgehalt von 0,6 bis 1 Gew.% aufweist, der einen Flächenanteil des Kernes von 50 bis 75 % der Querschnittsfläche der Erodierelektrode einnimmt, daß die Zwischenschicht einen Flächenanteil von 5 bis 40 % und die Mantelschicht einen Flächenanteil von 10 bis 30 % aufweist, daß der Zinkgehalt der Mantelschicht zwischen 40 und 60 Gew.% beträgt, daß die Leitfähigkeit der Erodierelektrode mindestens 10 vorzugsweise größer 12 S·m/mm² ist und daß die Festigkeit der Erodierelektrode mindestens 1800 N/mm² beträgt.

6. Erodierelektrode nach Anspruch 5, **dadurch gekennzeichnet, daß** die Zwischenschicht aus Kupfer mit einem geringen Silberanteil besteht.

7. Erodierelektrode nach Anspruch 6, **dadurch gekennzeichnet, daß** die Zwischenschicht aus CuAgl besteht.

8. Erodierelektrode nach einem der Ansprüche 5 bis 7, **dadurch gekennzeichnet, daß** die Festigkeit der Erodierelektrode mindestens 2000 N/mm² beträgt.

## Claims

1. A method of manufacturing a high-strength erosion electrode comprising a core of steel, an intermediate layer of copper or an alloy with a high copper content, and an outer layer of an alloy containing at least 40% zinc, **characterised in that** a steel with a carbon content of 0.6% to 1% by weight is used as a core, to which the intermediate layer of copper or an alloy with a high copper content is applied, **in that** an outer layer of zinc or an alloy with a high zinc content is applied to the intermediate layer, **in that** the wire undergoes a first intermediate annealing process of a diffusion annealing process so that on the one hand the outer layer forms a zinc-containing alloy, the melting point of which is higher than the austenitising temperature necessary for patenting the steel core, and on the other hand the diffusion process is carried out until the outer layer has the desired composition and thickness, taking into account one or more subsequent patenting processes of the erosion wire, the erosion electrode being patented during each intermediate annealing process.

2. A method according to claim 1, **characterised in that** a patented steel wire provided with an intermediate copper layer is used as a starting wire, **in that** an outer layer with a high zinc content is applied to the intermediate layer, **in that** the wire then undergoes diffusion annealing so that a brass outer layer of predetermined composition and thickness is formed, and **in that** the erosion electrode is patented after each deformation step before reaching its final diameter.

3. A method according to claim 1 or 2, **characterised in that**, after the first diffusion annealing process, the outer layer has a zinc content not exceeding 60%.

4. A method according to either one of claims 2 and 3, **characterised in that** the starting wire has a core diameter of 0.8 mm and an intermediate layer thickness of 0.1 mm, **in that** the outer layer applied to the intermediate layer is 30 µm, **in that** the wire then undergoes diffusion annealing at 400°C over a period of 4 h and is then drawn to a diameter of approx. 0.4 mm, **in that** the erosion wire is subsequently patented and then drawn to its final diameter, optionally with further patenting processes.

5. An erosion electrode comprising a core of steel, an intermediate layer of copper or an alloy with a high copper content, and an outer layer containing at least 40% zinc, **characterised in that** the steel core has a patented structure with a carbon content of 0.6% to 1% by weight and occupies an area of 50% to 75% of the cross-sectional area of the erosion electrode, **in that** the intermediate layer has an area of 5% to 40% and the outer layer has an area of 10% to 30%, **in that** the zinc content of the outer layer is between 40% and 60% by weight, **in that** the conductivity of the erosion electrode is at least 10 S·m/mm², preferably greater than 12 S·m/mm², and **in that** the strength of the erosion electrode is at least 1800 N/mm².

6. An erosion electrode according to claim 5, **characterised in that** the intermediate layer comprises copper with a low silver content.

7. An erosion electrode according to claim 6, **characterised in that** the intermediate layer comprises CuAgl.

8. An erosion electrode according to any one of claims 5 to 7, **characterised in that** the strength of the erosion electrode is at least 2000 N/mm².

## Revendications

1. Procédé de fabrication d'une électrode d'érosion à haute résistance comportant un noyau en acier, une couche intermédiaire en cuivre ou en un alliage à forte teneur en cuivre et une couche enveloppe en un alliage contenant au moins 40 % de zinc, **caractérisé en ce qu'**on utilise comme noyau un acier à teneur en carbone de 0,6 à 1 % en poids, sur lequel est appliquée la couche intermédiaire en cuivre ou en alliage à forte teneur en cuivre, **en ce qu'**une couche enveloppe en zinc ou en alliage à forte teneur en zinc est appliquée sur la couche intermédiaire, **en ce que** le fil métallique est soumis, avant un premier recuit intermédiaire, à un recuit de diffusion tel que, d'une part, la couche enveloppe forme un alliage contenant du zinc, dont le point de fusion est supérieur à la température d'austénitisation nécessaire pour le patentage du noyau en acier et, d'autre part, le processus de diffusion est effectué, en prenant en considération un ou plusieurs patentages ultérieurs du fil métallique d'érosion, aussi longtemps que la couche enveloppe conserve la composition et l'épaisseur souhaitées, l'électrode d'érosion étant patentée lors de chaque recuit intermédiaire.

2. Procédé selon la revendication 1, **caractérisée en ce que**, comme fil métallique de départ, on met en oeuvre un fil métallique patenté pourvu d'une couche intermédiaire de cuivre, **en ce qu'**on applique sur la couche intermédiaire une couche enveloppe à forte teneur en zinc, **en ce que**, ensuite, le fil métallique est soumis à un recuit de diffusion tel qu'il en résulte une couche enveloppe en laiton de composition et de résistance prédéterminées et **en ce que** l'électrode d'érosion est patentée après chaque opération de déformation avant d'atteindre son diamètre final.

3. Procédé selon la revendication 1 ou 2, **caractérisée en ce que** la couche enveloppe comporte après le premier recuit de diffusion une teneur en zinc qui ne dépasse pas 60 %.

4. Procédé selon l'une des revendications 2 ou 3, **caractérisé en ce que** le fil métallique de départ présente un diamètre de noyau de 0,8 mm et une épaisseur de couche de la couche intermédiaire de 0,1 mm, **en ce que** la couche enveloppe appliquée sur la couche intermédiaire est de 30 µm, **en ce que** le fil métallique est ensuite soumis à un recuit de diffusion à 400 °C pendant plus de 4 h, puis est étiré jusqu'à un diamètre d'environ 0,4 mm, **en ce que** le fil métallique d'érosion est ensuite patenté, puis étiré en subissant éventuellement d'autres patentages à son diamètre final.

5. Électrode d'érosion comportant un noyau en acier, une couche intermédiaire en cuivre ou en alliage à forte teneur en cuivre et une couche enveloppe contenant au moins 40 % de zinc, **caractérisée en ce que** le noyau en acier présente une structure patentée ayant une teneur en carbone de 0,6 à 1 % en poids, qui prend une partie de la surface du noyau de 50 à 75 % de la section transversale de l'électrode d'érosion, **en ce que** la couche intermédiaire prend une partie de la surface de 5 à 40 % et la couche enveloppe une partie de la surface de 10 à 30 %, **en ce que** la teneur en zinc de la couche enveloppe est de 40 à 60 % en poids, **en ce que** la conductivité de l'électrode d'érosion est d'au moins 10 et de préférence supérieure à 12 S·m/mm² et **en ce que** la résistance de l'électrode d'érosion est d'au moins 1800 N/mm².

6. Electrode d'érosion selon la revendication 5, **caractérisée en ce que** la couche intermédiaire est en cuivre avec une faible proportion d'argent.

7. Électrode d'érosion selon la revendication 6, **caractérisée en ce que** la couche intermédiaire est en CuAgl.

8. Electrode d'érosion selon l'une des revendications 5 à 7, **caractérisée en ce que** la résistance de l'électrode d'érosion est d'au moins 2000 N/mm².
